# EUROPEAN PATENT APPLICATION

(11) **EP 1 036 650 A2**
(43) Date of publication of application: **20.09.2000**
(21) Application number: 00302166.4
(22) Date of filing: 16.03.2000
(51) Int. Cl.: B32B 17/04

(54) **Laminated wood product for use in cargo covers for sports utility vehicles**

(30) Priority: 16.03.1999 US 268882
(71) Applicant: G & L Industries, Inc., Chesterfield, Michigan 48051 (US)
(72) Inventor: Elliot, Cy, North Street, Michigan 48049 (US)
(74) Representative: Price, Nigel John King

(57) **Abstract**

A cargo cover comprising a plurality of thermoplastic composite sheets and at least one thermoplastic sheet comprising a plurality of chopped glass fibers, disposed between adjacent thermoplastic composite sheets.

## Description

### Field of the Invention

The present invention relates to a multi-layered wood and polypropelene composite product. More particularly, the present invention relates to a multi-layered wood and polypropelene composite product which extends between the front and rear seats and the cargo area of sport utility vehicles, trucks, cars, vans and seat backs for creating load bearing sufaces.

### Background of the Invention

Sport utility vehicles have become a popular choice for individuals living within the cities or the suburbs as well as for individuals living in a rural setting. These sport utility vehicles come with both front and rear seats and normally have a cargo area located behind the rear seat. In most of the sport utility models offered, the rear seat is foldable in order to increase the size of the cargo area when the user needs to transport a large item or a large number of items. The front and rear seats are normally positioned on the vehicle's floor board which is lower than the floor of the cargo area. This lower floor board area provides a recessed area immediately in front of the cargo area to accommodate the legs of additional passengers when a third seat is positioned on the floor of the cargo area.

In order to provide a relatively flat floor or surface for the expanded cargo area created by folding the rear seats, the rear seats typically fold by having the seat cushion pivot upwards to lie adjacent to the back of the front seats and then the seat back is pivoted forward to occupy the area immediately behind the folded seat cushion and in front of the cargo floor. The folding of the seat cushion and the seat back positions the back of the rear seat at generally the same height as and parallel to the floor of the cargo area. The pivoting of the seat back forward will normally leave a portion of the recessed floor board area between the rear seat and the cargo floor open, thus creating a step or an open area in the floor of the now expanded cargo area. In order to cover the open area and provide a generally flat cargo floor for the entire expanded cargo area, various designs of panels or covers have been developed which pivot into position to cover the open area once the rear seat has been folded. These panels or covers are typically movable between a stored position when the rear seat is in its upright position and a third seat is installed to a functional position to create the flat floor of the cargo area when the rear seat is in its upright position without a third seat or when the rear seat is in its folded position.

The design requirements for these panels or covers include the requirement of being relatively light in order to enable the vehicle's user to be able to easily move the panel or cover between its stored and its functional position. While the panel or cover needs to be relatively light, it also needs to be strong in order to support the load of any cargo placed on the panel or cover. Typical load bearing requirements state that the panel or cover must support a two hundred and fifty pound load for four hours when the temperature of the panel or cover is one hundred and fifty degrees Fahrenheit. At the end of the four hours, the panel or cover must show less than six millimeters of permanent deflection.

The continued development of these panels or covers has been directed to materials which are capable of meeting this stringent test requirement while reducing the costs of material and/or reducing the costs associated with the manufacturing of the panel or cover.

### Summary of the Invention

The present invention provides the art with a panel or cover which is manufactured using a multi-layered assembly. The multi-layered assembly comprises a plurality of thermoplastic composite (TPC) sheets having a glass fiber composite polypropelene based sheet located between adjacent sheets of the TPC material.

Other advantages and objects of the present invention will become apparent to those skilled in the art from the subsequent detailed description, appended claims and drawings.

### Brief Description of the Drawings

In the drawings which illustrate the best mode presently contemplated for carrying out the present invention:
Figure 1 is a side view of the passenger area of a vehicle with the rear seats folded;
Figure 2 Is a side view of the passenger area of a vehicle with the rear seats of the vehicle in an upright position;
Figure 3 is a perspective view of the cover shown in Figures 1 and 2;
Figure 4 is a cross-sectional view of the cover shown in Figure 3; and
Figure 5 is an exploded view of the multi-layered structure shown in Figure 4.

### Detailed Description of the Preferred Embodiment

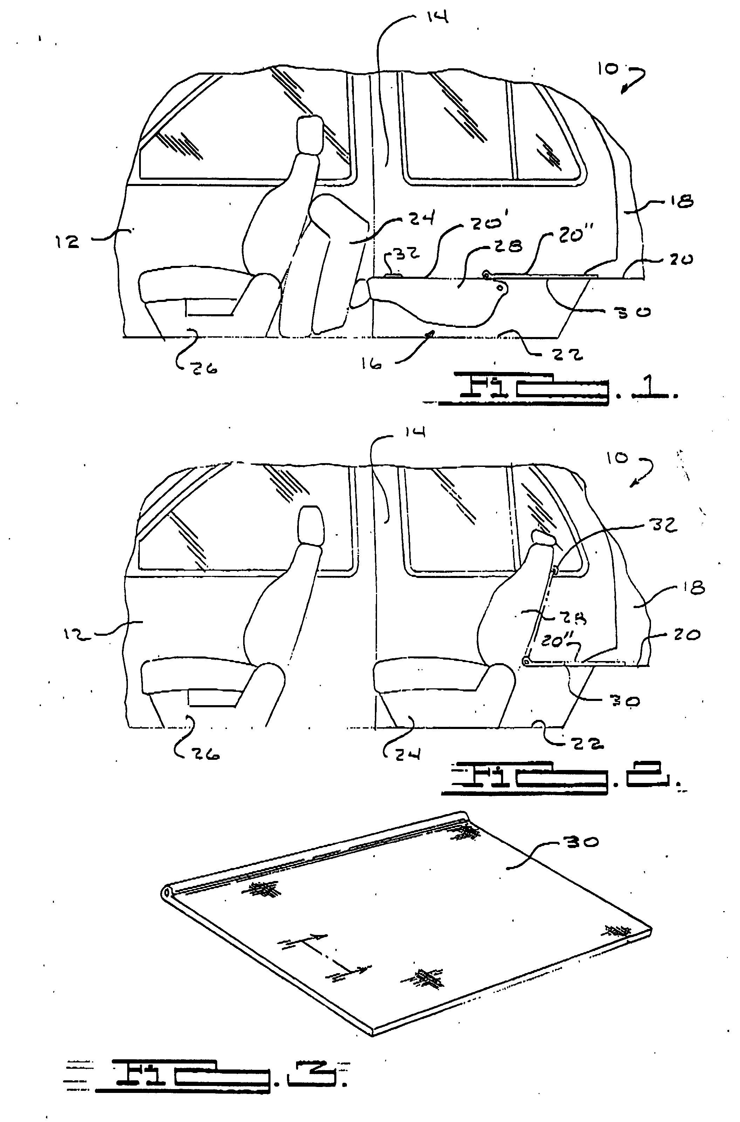

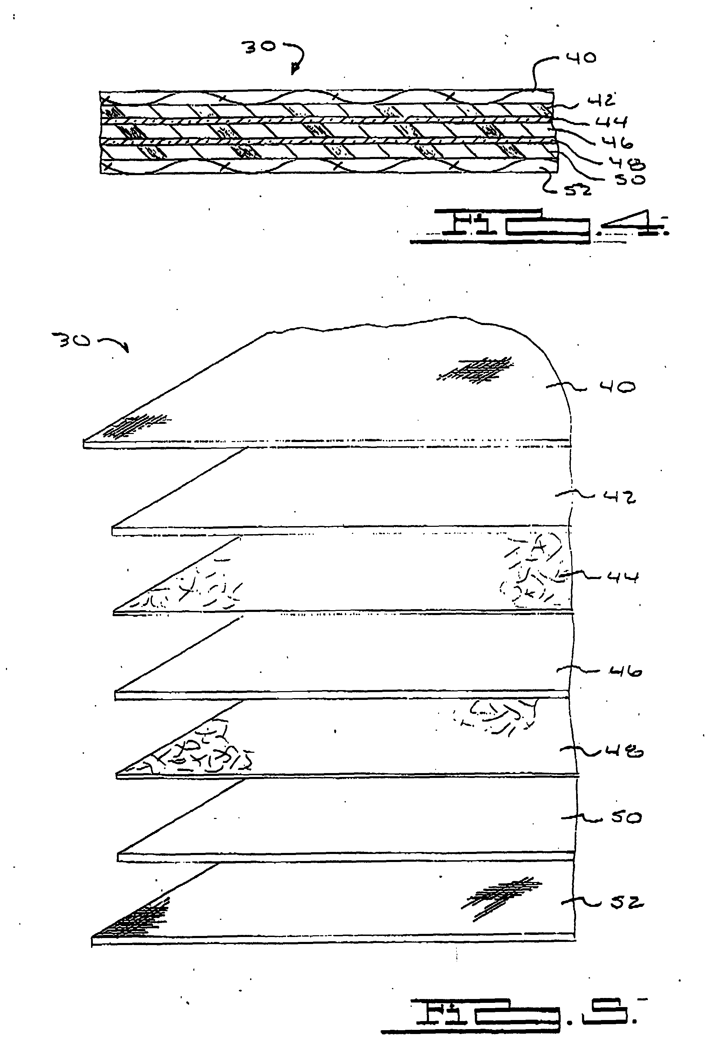

Referring now to the drawings in which like reference numerals designate like or corresponding parts throughout the several views, there is shown in Figure 1 an Interior portion of a vehicle which incorporates the unique panel or cover in accordance with the present invention which is designated generally by the reference numeral 10. Vehicle 10 comprises a body 12 which defines a passenger compartment 14. A rear seat assembly 16 and a cargo area 18 having a stationary cargo floor 20 are located within passenger compartment 14. Rear seat assembly 16 is secured to a floor 22 of vehicle 10 which is positioned lower than cargo floor 20. Rear seat assembly 16 is movable between a folded position, as shown in Figure 1, and an upright position as shown in Figure 2. When rear seat assembly 16 is located in its folded position as shown In Figure 1, the size of cargo area 18 is increased and rear seat assembly 16 is not accessible for seating additional occupants. A seat cushion 24 has been pivoted forward adjacent to the back of the front seats 26 and a seat back 28 forms an extension 20' to cargo floor 20. An auxiliary panel or cover 30 is pivotably secured to seat back 28. Cover 30 has been pivoted to span the gap between rear seat assembly 16 and cargo floor 20 to provide an additional cargo floor 20". Floors 20, 20' and 20" provide a generally flat cargo floor for the extended cargo area 18. When rear seat assembly 16 is located in its upright position as shown in Figure 2, the size of cargo area 18 is decreased and rear seat assembly 16 can accommodate additional passengers. Seat back 28 has been pivoted rearward to it upright position, seat cushion 24 has been pivoted rearward to its upright position and cover 30 has pivoted with respect to seat back 28 but remains in a position to span the gap between rear seat assembly 16 and cargo floor 20 to still provide additional cargo floor 20". In this configuration, floors 20 and 20" provide a generally flat cargo floor for the reduced cargo area 18. Some vehicles come equipped with a removable third seat which is secured to cargo floor 20. When the third seat is installed by being secured to cargo floor 20, cover 30 is pivoted upward to lie adjacent to seat back 28 as shown in phantom in Figure 2. When cover 30 is pivoted upward, the gap between rear seat assembly 16 and cargo floor 20 is opened allowing leg space for the passengers in the third seat. This leg space is available since floor 22 of the vehicle is lower than cargo floor 20. When cover 30 is pivoted to this upward position, a latch assembly 32 secures cover 30 to seat back 28. Thus, during the life and use of vehicle 10, rear seat assembly 16 will continuously be moved between its folded position and its upright position by the consumer.

Referring now to Figures 3-5, cover 30 is illustrated at a generally thin rectangular member. Cover 30 comprises an outer layer 40, a first inner layer 42, a second inner layer 44, a third inner layer 46, a fourth inner layer 48, a fifth inner layer 50 and an outer layer 52. Outer layers 40 and 52 form an outer shell for inner layers 42, 44, 46, 48 and 50. Outer layers 40 and 52 are manufactured from cloth, vinyl, leather, carpeting or any other material which is designed to coincide with the remainder of the interior trim for vehicle 10, Outer layers 40 and 52 may be made from the same material or they can be made from different materials.

First inner layer 42, third inner layer 46 and fifth inner layer 50 are made from the same material. The description below will describe first inner layer 42 but it is to be understood that the same description also applies for third inner layer 46 and fifth inner layer 50. Inner layer 42 is manufactured from a thermoplastic composite (TPC) material which is a combination of a thermoplastic and a wood fiber. The thermoplastic material and the wood fiber can be combined using various percentages of thermoplastic and various percentages of wood fiber. Preferably, the thermoplastic material and the wood fiber are combined by using 50% thermoplastic and 50% wood fiber. Once these two constituents are combined they are molded into the desired shape to produce cover 30.

Second inner layer 44 and fourth inner layer 48 are made from the same material. The description below will describe second inner layer 44 but it is to be understood that the same description also applies for fourth inner layer 48. Inner layer 44 is manufactured from a combination of thermoplastic material and glass fibers. The preferred thermoplastic material for inner layer 44 is polypropelene. Regardless of which thermoplastic material is selected for inner layer 44, it must be the same thermoplastic material selected for inner layers 42, 46 and 50 described above. The glass fiber material is chopped into two inch lengths and these two inch lengths of glass fiber are normally dispensed over both sides of the thermoplastic material. The combination of the thermoplastic materials and the glass fibers are placed in an oven under pressure which partially imbeds the glass fibers into the thermoplastic material to hold the glass fibers.

The first through the fifth inner layers 42-50 are assembled as shown in Figure 5 with one layer having the glass fibers being located between adjacent layers of the TPC material. This multi-layered assembly Is then placed in an oven at 360°F under pressure. A chemical bonding occurs between the thermoplastic material of inner layers 42, 46 and 50 and the thermoplastic material of adjacent inner layers 44 and 48. This chemical bonding creates a monolithic composite board which is capable of meeting and exceeding the stringent test requirements of the automotive industry. The monolithic composite board is then covered with outer layers 40 and 52 to complete the manufacture of cover 30.

While the above detailed description describes the preferred embodiment of the present invention, it should be understood that the present invention is susceptible to modification, variation and alteration without deviating from the scope and fair meaning of the subjoined claims.

## Claims

1. A cargo cover comprising a plurality of thermoplastic composite sheets and at least one thermoplastic sheet comprising a plurality of chopped glass fibers, disposed between adjacent thermoplastic composite sheets.

2. A cargo cover according to claim 1, wherein a said thermoplastic sheet is disposed between each pair of adjacent thermoplastic composite sheets.

3. A cargo cover according to claim 1 or 2, further comprising an outer layer covering one or two of said thermoplastic composite sheets.

4. A cargo cover according to any one of the preceding claims, wherein said plurality of thermoplastic composite sheets includes a first, second and third thermoplastic composite sheet and said at least one thermoplastic sheet disposed between adjacent thermoplastic composite sheets includes a first thermoplastic sheet disposed between said first and second thermoplastic composite sheets and a second thermoplastic sheet disposed between said second and third thermoplastic composite sheets.

5. A cargo cover according to any one of the preceding claims, wherein at least one thermoplastic composite sheet comprises a thermoplastic material and a wood fiber.

6. A cargo cover according to any one of the preceding claims, wherein at least one thermoplastic sheet comprises polypropelene.

7. A cargo cover according to any one of the preceding claims, wherein each of said thermoplastic composite sheets comprises a thermoplastic material and a wood fiber.

8. A cargo cover according to claim 5 or 7, wherein said thermoplastic material is polypropelene.

9. A cargo cover according to any one of the preceding claims, wherein each of said thermoplastic sheets comprises polypropelene.

10. A method of manufacturing a cargo cover, which method comprises:
- providing a first thermoplastic sheet;
- covering said first thermoplastic sheet with a plurality of chopped glass fibers;
- heating said first thermoplastic sheet and said plurality of chopped glass fibers to bond said glass fibers to said first thermoplastic sheet;
- providing a first and second thermoplastic composite sheet;
- locating said first thermoplastic sheet between said first and second thermoplastic composite sheets; and
- heating said first thermoplastic composite sheet, said first thermoplastic sheet and said second thermoplastic composite sheet to fuse said sheets together.

11. A method according to claim 10, further comprising:
- providing a second thermoplastic sheet;
- covering said second thermoplastic sheet with a plurality of chopped glass fibers;
- heating said second thermoplastic sheet and said plurality of chopped glass fibers to bond said glass fibers to said second thermoplastic sheet;
- providing a third thermoplastic composite sheet;
- locating said second thermoplastic sheet between said second and third thermoplastic composite sheets; and
- heating said second thermoplastic composite sheet, said second thermoplastic sheet and said third thermoplastic composite sheet to fuse said sheets together.

12. A method according to claim 11, further comprising:
- covering said first thermoplastic composite sheet with a first outer layer; and
- covering said third thermoplastic composite sheet with a second outer layer.
